# EUROPEAN PATENT APPLICATION

(11) **EP 4 471 882 A1**
(43) Date of publication of application: **04.12.2024**
(21) Application number: 24174650.2
(22) Date of filing: 07.05.2024
(51) Int. Cl.: H01M 4/04, H01M 4/131, H01M 4/1391, H01M 4/36, H01M 4/525, H01M 4/62, H01M 10/0525, H01M 4/02

(54) **CATHODE ACTIVE MATERIAL FOR LITHIUM SECONDARY BATTERY, METHOD OF PREPARING THE SAME AND LITHIUM SECONDARY BATTERY INCLUDING THE SAME**

(30) Priority: 09.05.2023 KR 20230059771
(71) Applicant: SK On Co., Ltd., Seoul 03161 (KR)
(72) Inventor: KIM, Sang Bok, 34124 Daejeon (KR); KIM, Sung Beom, 34124 Daejeon (KR); PARK, Sang Min, 34124 Daejeon (KR); JANG, Ji Hye, 34124 Daejeon (KR)
(74) Representative: Stolmár & Partner Patentanwälte PartG mbB

(57) **Abstract**

A cathode active material for a lithium secondary battery includes a lithium-nickel-based metal oxide particle, and a coating formed on a surface of the lithium-nickel-based metal oxide particle. The coating includes a water-soluble polymer and an oxygen scavenger compound. Oxygen generated from the cathode active material can be directly removed by the coating.

## Description

### TECHNICAL FIELD

The disclosure of this patent application relates to a cathode active material for a lithium secondary battery, a method of preparing the same and a lithium secondary battery including the same. More particularly, the present disclosure relates to a cathode active material for a lithium secondary battery including lithium and nickel, a method of preparing the same and a lithium secondary battery including the same.

### BACKGROUND

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source such as an electric automobile.

For example, a lithium secondary battery is actively developed and applied due to high operational voltage and energy density per unit weight, a high charging rate, a compact dimension, etc.

A lithium-transition metal oxide may be used as a cathode active material of a lithium secondary battery. Examples of the lithium metal oxide include a lithium-nickel-based metal oxide.

As an application range of the lithium secondary battery is being expanded, extended life-span, higher capacity and operational stability are required. To implement a high-capacity cathode, a content of nickel contained in the lithium-nickel-based metal oxide is increased. However, as the content of nickel increases, a crystal structure in a cathode active material particle may be deformed and damaged. Further, as charging/discharging of the lithium secondary battery is repeated, a side reaction due to a change in an oxidation number of nickel may be caused.

### SUMMARY

According to an aspect of the present disclosure, there is provided a cathode active material for a lithium secondary battery having improved operational stability and chemical reliability.

According to an aspect of the present disclosure, there is provided a method of preparing a cathode active material for a lithium secondary battery having improved operational stability and chemical reliability.

According to an aspect of the present disclosure, there is provided a lithium secondary battery including the cathode active material for a lithium secondary battery.

A cathode active material for a lithium secondary battery includes a lithium-nickel-based metal oxide particle, and a coating formed on a surface of the lithium-nickel-based metal oxide particle. The coating includes a water-soluble polymer and an oxygen scavenger compound.

In some embodiments, the water-soluble polymer may include poly(diallyl dimethyl ammonium chloride), poly(acrylamide-co-diallyldimethylammonium chloride), polyethylene imine, polyethylene glycol, polyethylene glycol diglycidyl ether, dopamine, (3-glycidyloxypropyl)trimethoxysilane, poly(1-vinylpyrrolidone-co-2-dimethylaminoethyl methacrylate), etc. These may be used alone or in a combination of two or more therefrom. may be used alone or in a combination of two or more therefrom.

In some embodiments, the oxygen scavenger compound may include an organic acid compound, a sulfite-based compound or a phosphite-based compound.

In some embodiments, the organic acid compound may include ascorbic acid or a derivative thereof.

In some embodiments, the sulfite-based compound may include sodium sulfite, ammonium sulfite, calcium sulfite, potassium sulfite, barium sulfite, etc. These may be used alone or in a combination of two or more therefrom.

In some embodiments, the phosphite ester-based compound may be represented by Chemical Formula 3.

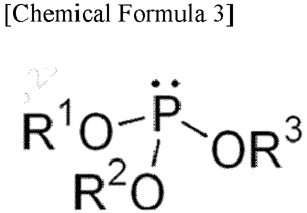

In Chemical Formula 3, R¹, R² and R³ may each independently be hydrogen, a C1-C10 alkyl group or a silyl group.

In some embodiments, a molar ratio of nickel may be 0.8 or more of elements except for lithium and oxygen in the lithium-nickel-based metal oxide particle.

In some embodiments, a content of the water-soluble polymer may be in a range from 0.05 wt% to 2 wt% based on a weight of the lithium-nickel-based metal oxide particle.

In some embodiments, a content of the oxygen scavenger compound may be in a range from 0.02 wt% to 1.5 wt% based on a weight of the lithium-nickel-based metal oxide particle.

In some embodiments, the lithium-nickel-based metal oxide particle may have a structure of a secondary particle in which a plurality of primary particles are aggregated. The coating may be formed on an outer surface of the secondary particle and at an interface between the primary particles in an inner region of the secondary particle.

A lithium secondary battery includes a cathode including the above-described cathode active material, and an anode facing the cathode.

In a method of preparing a cathode active material for a lithium secondary battery, lithium-nickel-based metal oxide particles are mixed into an aqueous solution containing a water-soluble polymer and an oxygen scavenger compound. The lithium-nickel-based metal oxide particles mixed with the aqueous solution are heat-treated.

In some embodiments, the aqueous solution may include 5 wt% to 20 wt% of water based on a total weight of the lithium-nickel-based metal oxide particles.

In some embodiments, the aqueous solution may include 0.05 wt% to 2 wt% of the water-soluble polymer, and 0.02 wt% to 1.5 wt% of the oxygen scavenger compound based on the total weight of the lithium-nickel-based metal oxide particles.

In some embodiments, heat-treating may be performed at a temperature in a range from 200°C to 350°C.

In the cathode active material for a lithium secondary battery according to embodiments of the present disclosure, a coating including a water-soluble polymer and an oxygen scavenger compound may be formed on a lithium-nickel-based metal oxide particle. Oxygen generated on a surface of an active material particle may be directly removed by the oxygen scavenger compound. Thus, a decrease in a capacity and an increase in an internal resistance caused by oxygen may be suppressed, and crystal stability and chemical stability of the active material particle may be improved by the coating.

In example embodiments, preliminary active material particles may be mixed with an aqueous solution in which the water-soluble polymer and the oxygen scavenger compound are dissolved, and then the active material particles including the coating may be prepared through a heat treatment. Accordingly, an additional washing process using water may be omitted, and an impurity cleaning effect may be implemented while forming the coating.

The cathode active material and the lithium secondary battery of the present disclosure may be widely applied in green technology fields such as an electric vehicle, a battery charging station, a solar power generation, a wind power generation, etc., using a battery, etc. The cathode active material and the lithium secondary battery according to the present disclosure may be used for eco-friendly electric vehicles and hybrid vehicles to prevent a climate change by suppressing air pollution and greenhouse gas emissions, etc.

### BRIEF DESCRIPTION OF THE DRAWINGS

FIGS. 1 and 2 are a schematic plan view and a schematic cross-sectional view, respectively, illustrating a lithium secondary battery in accordance with example embodiments.
FIGS. 3A, 3B and 3C are scanning electron microscope (SEM) images showing surfaces of active material particles prepared according to Example 1, Example 4 and Comparative Example 1, respectively.

### DETAILED DESCRIPTION OF THE EMBODIMENTS

According to embodiments of the present disclosure, a cathode active material for a lithium secondary battery including a lithium-nickel-based metal oxide particle and a coating, and a method of preparing the cathode active material are provided. Further, a lithium secondary battery including the cathode active material is also provided.

### <Cathode Active Material for Lithium Secondary Battery and Method of Preparing the Same>

A cathode active material for a lithium secondary battery (hereinafter, that may be abbreviated as a cathode active material) may include a lithium-nickel-based metal oxide particle and a coating formed on the lithium-nickel-based metal oxide particle.

The lithium-nickel-based metal oxide particle may contain lithium and nickel, and may further include at least one metal element. For example, the lithium-nickel-based metal oxide particle may further include at least one of manganese (Mn) and cobalt (Co). In an embodiment, the lithium-nickel-based metal oxide particle may further include manganese and cobalt. In this case, the lithium-nickel-based metal oxide particle may include a Ni-Co-Mn (NCM)-based lithium oxide.

In example embodiments, Ni may be included in the highest content (molar ratio or atomic percent) of elements except for lithium and oxygen included in the lithium-nickel-based metal oxide particle.

For example, the Ni content may be 0.6 or more, preferably 0.7 or more, and more preferably 0.8 or more. For example, the molar ratio of Ni may be in a range from 0.8 to 0.94, from 0.82 to 0.94, from 0.83 to 0.94, from 0.84 to 0.94, from 0.85 to 0.94, or from 0.88 to 0.94.

Ni may serve as a transition metal related to a power and a capacity of a lithium secondary battery. Thus, a high-Ni composition may be adopted in the cathode active material as described above, a high-capacity cathode and a high-capacity lithium secondary battery may be provided.

However, as the Ni content increases, long-term storage stability and life-span stability of the cathode or the secondary battery may be relatively reduced. However, according to example embodiments, electrical conductivity may be maintained by including Co, while life-span stability and capacity retention properties may be improved by including Mn.

In some embodiments, the lithium-nickel-based metal oxide particle may include a layered structure or a crystal structure represented by Chemical Formula 1 below.

[Chemical Formula 1] LiₐNiₓM_{b}O₂

In Chemical Formula 1, 0.8≤x≤0.94, 0.95≤a≤1.05, 0.06≤b≤0.2, and M may include at least one element from B, Al, Ti, V, Mn, Co, Zn, Y, Nb, Zr, Mo, Sn, Mg, Sr, Ba and W.

In an embodiment, as described above, M may include Co and Mn, and may further include at least one element selected from B, Al, Ti, V, Zn, Y, Nb, Zr, Mo, Sn, Mg, Sr, Ba and W.

For example, the element other than Co and Mn in the elements indicated by M may serve as a doping element or a surface coating element for the lithium-nickel-based metal oxide particle. The lithium-nickel-based metal oxide particle may be passivated by the doping element or the surface coating element, thereby further improving crystal stability and chemical stability of the lithium-nickel-based metal oxide particle.

The chemical structure represented by Chemical Formula 1 represents a bonding relationship included in the layered structure or the crystal structure of the lithium-nickel-based metal oxide particle and is not intended to exclude other additional elements.

According to embodiments of the present disclosure, a coating including a water-soluble polymer and an oxygen scavenger compound may be formed on the surface of the lithium-nickel-based metal oxide particle.

The water-soluble polymer may provide a polymer matrix that may fix the oxygen scavenger compound on the surface of the lithium-nickel-based metal oxide particle.

In example embodiments, the water-soluble polymer may include a polymer having increased solubility in water. Accordingly, the entire surface of the lithium-nickel-based metal oxide particle may be uniformly coated by a wet process.

In some embodiments, the water-soluble polymer may include a polymer having a solubility in water of 5% or more.

For example, the water-soluble polymer may include poly(diallyl dimethyl ammonium chloride) (polyDADMAC), poly(acrylamide-co-diallyldimethylammonium chloride) (PAMDADMAC), poly(ethylene imine) (PEI), poly(ethylene glycol) (PEG), poly(ethylene glycol) diglycidyl ether (PEGDGE), dopamine, (3-glycidyloxypropyl)trimethoxysilane (GPTMS), poly (I-vinylpyrrolidone-co-2-dimethylaminoethyl methacrylate) (PVPDMA), etc. These may be used alone or in a combination of two or more therefrom.

The oxygen scavenger compound may include a compound capable of capturing, removing or decomposing oxygen generated by deformation of the lattice structure of the lithium-nickel-based metal oxide particle, side reactions with an electrolyte, etc.

The oxygen scavenger compound may include a compound containing a plurality of hydroxyl groups, a plurality of oxygen anion (-O-) groups, or a plurality of alkoxy groups in a molecule.

In example embodiments, the oxygen scavenger compound may include an organic acid compound containing a plurality of hydroxyl groups, a sulfite-based compound or a phosphite ester-based compound.

In an embodiment of the present disclosure, the organic acid compound may include ascorbic acid or a derivative thereof. Non-limiting examples of the ascorbic acid derivative include ascorbyl glucoside, ethyl ascorbyl ether, sodium ascorbyl phosphate, etc. These may be used alone or in a combination of two or more therefrom.

The sulfite-based compound may contain a sulfite anion represented by Chemical Formula 2.

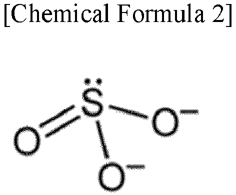

For example, the sulfite-based compound may include a sulfite salt containing the sulfite anion. In some embodiments, the sulfite-based compound may include sodium sulfite, ammonium sulfite, calcium sulfite, potassium sulfite, barium sulfite, etc. In an embodiment, the sulfite-based compound may include sodium sulfite (Na₂SO₃). These may be used alone or in a combination of two or more therefrom.

The phosphite ester-based compound may be represented by Chemical Formula 3 below.

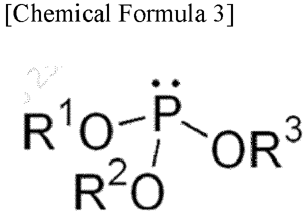

In Chemical Formula 3, R¹, R² and R³ may each independently be hydrogen, a C1-C10 alkyl group, or a silyl group.

In an embodiment, R¹, R² and R³ may each independently be a C1-C5 alkyl group or a silyl group.

Hydrogen or a C1-C5 alkyl group may be bonded to a silicon atom of the silyl group, and, in an embodiment, the C1-C5 alkyl group may be bonded.

In some embodiments, the phosphite ester-based compound may include tris (trimethylsilyl) phosphite (TMSPi), triethyl phosphite (TEPi), etc.

As described above, the lithium-nickel-based metal oxide particle may include a high content of nickel (High-Ni). While charging and discharging are repeated in the High-Ni cathode active material, intercalation/deintercalation of lithium ions may be repeated.

Accordingly, an oxidation number of Ni may be changed (e.g., Ni³⁺→Ni⁴⁺→ Ni²⁺), and oxygen may be deintercalated in a lattice structure or a crystal structure of the cathode active material. Deintercalated oxygen may be released in the form of active radicals, resulting in a side reaction with the electrolyte. Due to the side reaction, a gas such as CO₂ may be generated. The gas generated by the side reaction may cause volume expansion of the battery, and cycle properties and capacity retention of the battery may be reduced.

According to embodiments of the present disclosure, the oxygen scavenger compound may be distributed on the surface of the lithium-nickel-based metal oxide particle to directly capture and remove oxygen generated from the active material particles. Thus, an amount of an active oxygen generated by repeated charging/discharging may be directly reduced or removed, thereby efficiently preventing the side reaction with the electrolyte.

Additionally, the oxygen scavenger compound may be uniformly distributed and fixed in a matrix provided by the water-soluble polymer. Therefore, an oxygen scavenging activity may be continuously provided at a site where the active oxygen is generated.

For example, when ascorbic acid is used as the oxygen scavenger compound, ascorbic acid may be transformed into a form of DHA (dehydroascorbic acid) through dehydrogenation by the following Reaction Scheme 1, and oxygen radicals may be captured by Reaction Scheme 2 to generate water. 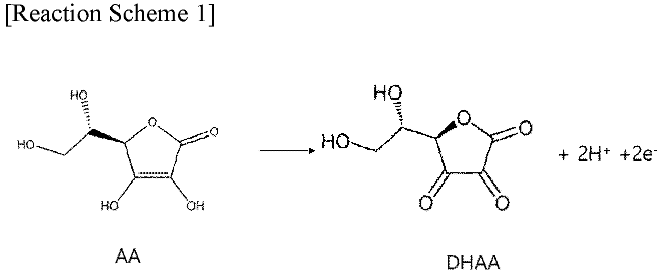 [Reaction Scheme 2] AA +1/2O₂ → DHAA +H₂O

As exemplified by the above Reaction Schemes, the coating may be provided as a barrier that may directly remove oxygen before the oxygen is released to an outside of the active material. Thus, an amount of gas that generated in the battery may be directly and efficiently reduced.

The lithium-nickel metal oxide particle may have a secondary particle structure formed by aggregation of a plurality of primary particles (e.g., 10 or more, 20 or more, 30 or more, 40 or more, 50 or more primary particles). In example embodiments, the coating may be formed on an outer surface of the secondary particle, and may also be formed at an interface between the primary particles in an inner region of the secondary particle.

Thus, the active oxygen may be removed from an inside of the lithium-nickel metal oxide particle while suppressing the release of the active oxygen from an outer surface of the lithium-nickel metal oxide particle.

In some embodiments, a content of the water-soluble polymer may be in a range from 0.05 weight percent (wt%) to 2 wt% based on a weight of the lithium-nickel metal oxide particle. In the above range, the coating may be uniformly formed on the entire surface of the lithium-nickel metal oxide particle while easily inducing penetration of the coating into the interface of the primary particles.

In an embodiment, the content of the water-soluble polymer may be in a range from 0.1 wt% to 1.5 wt%, from 0.2 wt% to 1 wt%, from 0.4 wt% to 1 wt%, or from 0.5 wt% to 1 wt%.

In some embodiments, a content of the oxygen scavenger compound may be in a range from 0.02 wt% to 1.5 wt% based on the weight of the lithium-nickel metal oxide particle. In the above range, sufficient oxygen removal efficiency may be implemented while preventing a decrease in the capacity of the cathode active material. Further, dispersibility of the oxygen scavenger compound is improved in the water-soluble polymer, so that oxygen scavenger compound molecules may be uniformly distributed in the polymer matrix.

In an embodiment, the content of the oxygen scavenger compound may be in a range from 0.1 wt% to 1.5 wt%, or from 0.2 wt% to 1 wt%.

An active material particle may be defined by the lithium-nickel metal oxide particle and the coating formed on the surface of the lithium-nickel metal oxide particle. The cathode active material may include a plurality of the active material particles.

For example, an amount of the active material particles based on the total weight of the cathode active material may be 50 wt% or more. Preferably, the amount of the active material particles based on the total weight of the cathode active material may be 60 wt% or more, 70 wt% or more, 80 wt% or more, or 90 wt% or more.

In an embodiment, the cathode active material may substantially consist of the active material particles.

In some embodiments, the cathode active material may further include a lithium cobalt oxide-based active material, a lithium manganese oxide-based active material, a lithium nickel oxide-based active material, or a lithium iron phosphate (LFP)-based active material (e.g., LiFePO₄) in addition to the above-described active material particles.

In some embodiments, the cathode active material may optionally further include a Li-rich layered oxide (LLO)-based active material, an over-lithiated oxide (OLO)-based active material, a Mn-rich-based active material, a Co-less-based active material, etc. These may be used alone or in a combination of two or more therefrom.

Hereinafter, a manufacturing method of the cathode active material will be described in more detail.

Lithium-nickel-based metal oxide particles may be prepared. For example, the lithium-nickel-based metal oxide particles having a composition of Chemical Formula 1 may be prepared.

In example embodiments, the lithium-nickel-based metal oxide particles may be prepared by reacting a nickel-containing precursor and a lithium precursor. The nickel-containing precursor may further include, e.g., manganese and/or cobalt.

In some embodiments, the nickel-containing precursor may be prepared in the form of a Ni-Co-Mn precursor (e.g., an (NCM)-hydroxide). For example, the nickel-containing precursor may be prepared by reacting a nickel source, a cobalt source and a manganese source together through a coprecipitation method. The nickel source, the cobalt source and the manganese source may include a hydroxide, a sulfate, a carbonate, an acetate, a nitrate, etc., of nickel, cobalt and manganese, respectively.

The above-described lithium-nickel-based metal oxide particles in the form of the secondary particles may be prepared by reacting the nickel-containing precursor and the lithium precursor (e.g., lithium hydroxide or lithium carbonate) through, e.g., a coprecipitation.

A precipitating agent and/or a chelating agent may be used to promote the coprecipitation reaction. The precipitating agent may include an alkaline compound such as sodium hydroxide (NaOH), sodium carbonate (Na₂CO₃), etc. The chelating agent may include, e.g., ammonia water, ammonium carbonate, etc.

In some embodiments, a source of a doping element represented by M in Chemical Formula 1 may be reacted together with nickel, cobalt and manganese.

In some embodiments, after preparing the lithium-nickel-based metal oxide particles, a firing process may be further performed. For example, the firing process may be performed at a temperature ranging from about 600°C to 1000°C. The layered structure of the lithium-nickel-based metal oxide particle may be stabilized by the firing process, and the doping element may be fixed.

In example embodiments, the lithium-nickel-based metal oxide particles may be mixed with an aqueous solution including the water-soluble polymer and the oxygen scavenger compound.

The aqueous solution may permeate into the interface of the primary particles contained in the lithium-nickel-based metal oxide particles through a capillary force.

In some embodiments, the aqueous solution may contain water in a range from 5 wt% to 20 wt% based on the total weight of the lithium-nickel metal oxide particles, and, in an embodiment, in a range from 10 wt% to 20 wt%. In the above range, the capillary phenomenon may be promoted and the interfacial coating of the primary particles may be easily formed.

The water-soluble polymer and the oxygen scavenger compound in the aqueous solution may be included in the content range as described above.

The aqueous solution and the lithium-nickel-based metal oxide particles may be uniformly mixed, and then vacuum-dried. For example, the drying may be performed at a temperature ranging from 100°C to 140°C, preferably from 110°C to 130°C.

Thereafter, the dried particles may be heat-treated in an oxygen atmosphere to obtain the coated active material particles. The heat-treatment may be performed at a temperature in a range from 150°C to 400°C, and in an embodiment, may be performed at a temperature in a range from 200°C to 350°C. In the above temperature range, the oxygen scavenger compound may be effectively fixed without damaging a matrix of the water-soluble polymer.

In some embodiments, impurities remaining on the surface of the lithium-nickel-based metal oxide particles may be reduced or removed through the wet coating process described above. For example, lithium impurities such as LiOH, Li₂CO₃, etc., generated by unreacted lithium may be dissolved and removed in the aqueous solution during the wet coating process.

Therefore, a separate or an additional washing process using water (pure water) may be omitted. Therefore, surface damage and oxidation of the lithium-nickel-based metal oxide particles caused during the washing process may be prevented.

### <Lithium Secondary Battery>

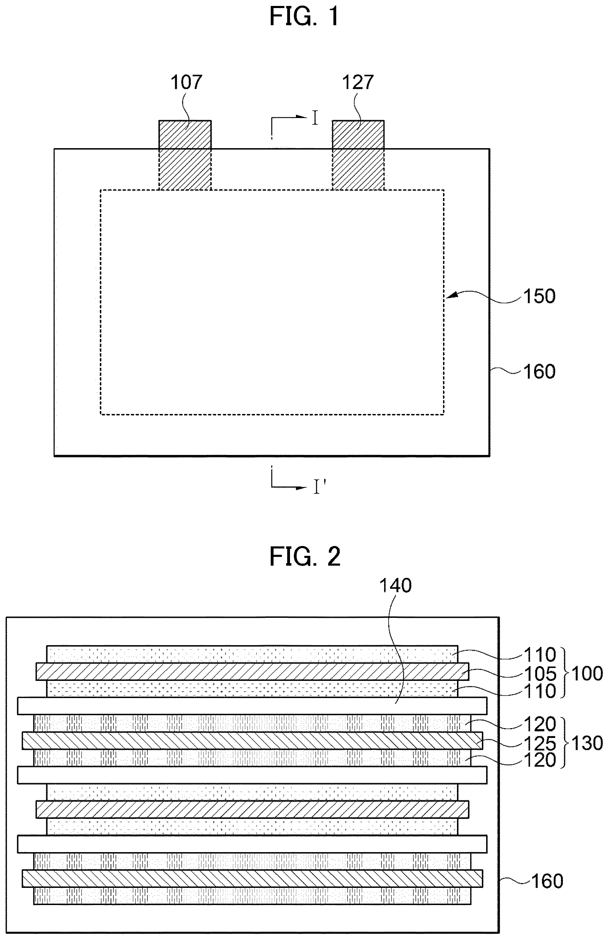

FIGS. 1 and 2 are a schematic plan view and a schematic cross-sectional view, respectively, of a lithium secondary battery in accordance with example embodiments. For example, FIG. 2 is a cross-sectional view taken along a line I-I' of FIG. 1.

FIGS. 1 and 2 provide an exemplary battery structure for convenience of illustration, and the lithium secondary battery of the present disclosure is not limited to the structure of FIGS. 1 and 2.

Referring to FIGS. 1 and 2, the lithium secondary battery may include a cathode 100 including a cathode active material layer including the above-described cathode active material for a lithium secondary battery and an anode 130 facing the cathode.

The cathode 100 may include a cathode active material layer 110 formed by coating the above-described cathode active material on a cathode current collector 105.

For example, a slurry may be prepared by mixing and stirring the above-described cathode active material with a binder, a conductive material and/or a dispersive agent in a solvent. The slurry may be coated on the cathode current collector 105, and then dried and pressed to form the cathode active material layer 110.

The cathode current collector 105 may include stainless-steel, nickel, aluminum, titanium, copper or an alloy thereof. Preferably, aluminum or an alloy thereof may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode active material layer 110 may be reduced, and an amount of the cathode active material may be relatively increased. Thus, a capacity and a power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The anode 130 may include an anode current collector 125 and an anode active material layer 120 formed by coating an anode active material on a surface of the anode current collector 125.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, a silicon-based compound, tin, etc., may be used.

The amorphous carbon may include a hard carbon, coke, a mesocarbon microbead (MCMB), a mesophase pitch-based carbon fiber (MPCF), etc.

The crystalline carbon may include a graphite-based material such as natural graphite, artificial graphite, a graphitized coke, a graphitized MCMB, a graphitized MPCF, etc.

The lithium alloy may further include aluminum, zinc, bismuth, cadmium, antimony, silicon, lead, tin, gallium, indium, etc.

The silicon-based compound may include, e.g., silicon, a silicon oxide (SiOx; 0<x<2), or a silicon-carbon composite compound such as silicon carbide (SiC).

For example, a slurry may be prepared by mixing and stirring the anode active material with a binder, a conductive material and/or a thickener in a solvent. The slurry may be coated on the anode current collector, and then dried and pressed to form the anode 130.

The binder and the conductive material substantially the same as or similar to those used for the cathode active material layer 110 may be used in the anode 130. In some embodiments, the binder for forming the anode 130 may include an aqueous binder such as styrene-butadiene rubber (SBR), and carboxymethyl cellulose (CMC) may also be used as the thickener.

A separator 140 may be interposed between the cathode 100 and the anode 130. The separator 140 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, etc. The separator 140 may also include a non-woven fabric formed from a glass fiber with a high melting point, a polyethylene terephthalate fiber, or the like.

The separator 140 may include a ceramic-based material. For example, inorganic particles may be coated on a polymer film or dispersed in the polymer film to improve heat resistance.

The separator 140 may have a single-layered or multi-layered structure including the polymer film and/or the non-woven fabric described above.

In some embodiments, an area and/or a volume of the anode 130 (e.g., a contact area with the separator 140) may be greater than that of the cathode 100. Thus, lithium ions generated from the cathode 100 may be easily transferred to the anode 130 without a loss by, e.g., precipitation or sedimentation.

In exemplary embodiments, an electrode cell may be defined by the cathode 100, the anode 130 and the separator 140, and a plurality of the electrode cells may be stacked to form an electrode assembly 150 that may have e.g., a jelly roll shape. For example, the electrode assembly 150 may be formed by winding, stacking or folding of the separator 140.

The electrode assembly 150 may be accommodated together with an electrolyte solution in a case 160 to define the lithium secondary battery. In example embodiments, a non-aqueous electrolyte solution may be used as the electrolyte solution.

The non-aqueous electrolyte may include a lithium salt and an organic solvent. The lithium salt may be represented by Li⁺X⁻ , and an anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

As illustrated in FIG. 1, electrode tabs (a cathode tab and an anode tab) may protrude from the cathode current collector 105 and the anode current collector 125 included in each electrode cell to one side of the case 160. The electrode tabs may be welded together with the one side of the case 160 to be connected to an electrode lead (a cathode lead 107 and an anode lead 127) that may be extended or exposed to an outside of the case 160.

The lithium secondary battery may be manufactured in, e.g., a cylindrical shape using a can, a prismatic shape, a pouch shape or a coin shape.

Hereinafter, experimental examples including specific examples are proposed to more concretely describe the present disclosure.

### Examples and Comparative Examples

Lithium-nickel-based metal oxide particles having a composition of Li[Ni_{0.8}Co_{0.1}Mn_{0.1}]O₂ were prepared. Specifically, lithium hydroxide as a lithium precursor and nickel-cobalt-manganese hydroxide as a composite metal precursor having a molar ratio corresponding to the above composition were uniformly mixed in a molar ratio of 1.01:1, thereby forming a mixture. The mixture was put in a firing furnace, and a temperature was increased to a temperature between 700°C and 800°C at a ramping rate of 2°C/min while supplying oxygen at a flow rate of 10 L/min, and maintained at the increased temperature for of 10 hours. After the firing, natural cooling was performed to room temperature, and lithium-nickel-based metal oxide particles were obtained as a cathode active material by pulverization and classification processes.

As shown in Table 1, an aqueous solution was prepared by mixing a water-soluble polymer, an oxygen scavenger compound and water.

The prepared lithium-nickel-based metal oxide particles and the aqueous solution were mixed and stirred in contents shown in Table 1 for 1 hour, and dried at 130°C for 1 hour. Thereafter, active material particles having a coating formed thereon were obtained by a heat-treatment at a temperature shown in Table 1 for 10 hours in an oxygen atmosphere.

In Comparative Example 1, the aqueous solution coating process was omitted.

**[Table 1]**

| | water-soluble polymer | | oxygen scavenger compound | | water (wt%) | heat-treatment temperature (°C) |
|---|---|---|---|---|---|---|
| | type | content (wt%) | type | content (wt%) | | |
| Example 1 | Poly(diallyl dimethyl ammonium chloride) | 0.5 | ascorbic acid | 1 | 10 | 250 |
| Example 2 | Poly(diallyl dimethyl ammonium chloride) | 0.5 | sodium sulfite | 1 | 10 | 250 |
| Example 3 | Poly(diallyl dimethyl ammonium chloride) | 0.5 | Tris(trimethylsilyl) phosphite | 0.2 | 10 | 250 |
| Example 4 | Poly(diallyl dimethyl ammonium chloride) | 0.5 | ascorbic acid | 1 | 10 | 400 |
| Example 5 | Poly(diallyl dimethyl ammonium chloride) | 0.5 | ascorbic acid | 1 | 10 | 150 |
| Example 6 | poly(ethylene glycol) diglycidyl ether | 0.5 | inositol hexaphosphate | 1 | 10 | 250 |
| Example 7 | poly(ethylene imine) | 0.5 | Al₂O₃ | 1 | 10 | 250 |
| Example 8 | dopamine | 2 | ascorbic acid | 2 | 10 | 250 |
| Example 9 | (3-glycidyloxypropyl) trimethoxy silane | 0.5 | ascorbic acid | 1 | 25 | 250 |
| Comparative Example 1 | - | - | - | - | 10 | 250 |
| Comparative Example 2 | Poly(diallyl dimethyl ammonium chloride) | 0.5 | - | - | 10 | 250 |
| Comparative Example 3 | - | - | ascorbic acid | 1 | 10 | 250 |

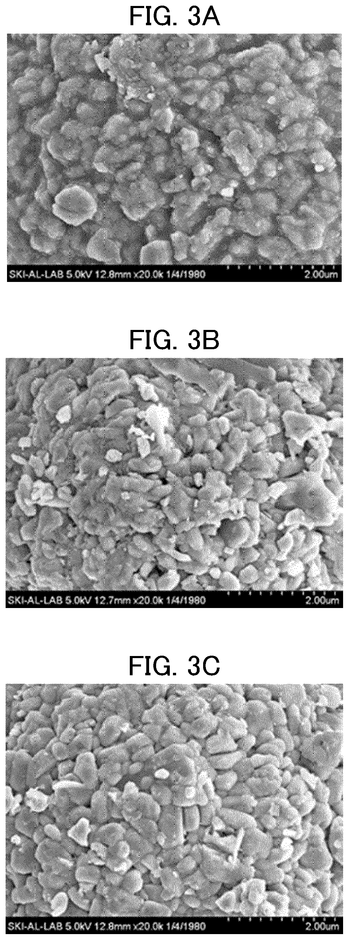

FIGS 3A, 3B and 3C are surface scanning electron microscope (SEM) images of active material particles prepared according to Example 1, Example 4 and Comparative Example 1, respectively.

Referring to FIGS. 3A to 3C, the oxygen scavenger compound was fixed and distributed in the water-soluble polymer matrix on the lithium-nickel-based metal oxide particles in Examples compared to the image of Comparative Example 1 where the coating formation was omitted.

Referring to FIG. 3B, in Example 4, the het-treatment temperature was increased and a region in which the polymer matrix was damaged and a non-uniform coating region were observed.

### Experimental Example

### (1) Measurement of residual lithium

2.5 g of the active material particles of Examples and Comparative Examples was added to a 250 mL flask, 110 g of deionized water was added, and then the mixture was stirred at a speed of 200 rpm for 10 minutes using a magnetic bar. Thereafter, 100 g was separated after filtering using a reduced pressure flask. The separated solution was put into a container of an automatic tester and automatically titrated with 0.1 N HCl with reference to a Wader method to measure a Li₂CO₃ value in the solution.

### (2) Evaluation on capacity retention of coin half-cell

A slurry was prepared by mixing the cathode active material prepared according to Examples and Comparative Examples, carbon black as a conductive material and polyvinylidene fluoride (PVDF) as a binder in a weight ratio of 92:5:3. The slurry was uniformly coated on an aluminum foil having a thickness of 15 µm and vacuum-dried at 130°C to prepare a cathode for a lithium secondary battery. An electrode assembly was formed using the cathode, a lithium foil as a counter electrode and a porous polyethylene film (thickness: 21 µm) as a separator.

A coin half-cell type 2mAh battery cell was manufactured by using an electrolyte solution in which LiPF₆ was dissolved with a concentration of 1.0M in a solvent including ethylene carbonate and ethyl methyl carbonate mixed in a volume ratio of 3:7.

### 1) Measurement of initial discharge capacity

Charging (CC/CV 0.1C 4.3V 0.005C CUT-OFF) and discharging (CC 0.1C 3.0V CUT-OFF) were performed once for the battery cells according to Examples and Comparative Examples to measure an initial discharge capacity (CC: constant current, CV: constant voltage).

### 2) Measurement of capacity retention

For the battery cells according to Examples and Comparative Examples, 100 cycles were repeated with a single cycle of charging (CC/CV 0.5C 4.3V 0.05C CUT-OFF) and discharging (CC 1.0C 3.0V CUT-OFF). A capacity retention was evaluated as a percentage of a discharge capacity at the 100th cycle relative to a discharge capacity at the 1st cycle.

### (3) Evaluation on full cell properties

The cathode active material prepared according to Examples and Comparative Examples, Denka Black as a conductive material and PVDF as a binder were mixed in a mass ratio of 94:3:3, respectively, to prepare a cathode mixture. The cathode mixture was coated on an aluminum current collector, and then dried and pressed to prepare a cathode. An electrode density of the cathode after the press was adjusted to 3.5 g/cc or more.

An anode slurry containing 93 wt% of natural graphite as an anode active material, 5 wt% of KS6 as a flake-type conductive material, 1% by weight of styrene-butadiene rubber (SBR) as a binder and 1 wt% carboxy methyl cellulose (CMC) as a thickener was prepared. The anode slurry above was coated, dried and pressed on a copper substrate to prepare an anode.

The cathode and the anode prepared as described above were each notched in a predetermined size. A separator (polyethylene, thickness of 25 µm) was interposed between the cathode and the anode to form an electrode cell, and then tab portions of the anode and the cathode were welded. The welded cathode/separator/anode assembly was put in a pouch, and three sides except for an electrolyte injection side were sealed. A region around the electrode tab portions was included in the sealing portion. An electrolyte was injected through the electrolyte injection side. The electrolyte injection side was also sealed and impregnated for 12 h or more to prepare a 20 Ah level secondary battery.

The electrolyte was prepared by adding 1 wt% of vinylene carbonate (VC), 0.5 wt% of 1,3-propensultone (PRS) and 0.5 wt% of lithium bis(oxalato)borate (LiBOB) to a 1M LiPF6 solution using a mixed solvent of EC/EMC/DEC (25/45/30; volume ratio).

### 1) Evaluation on 16-week capacity retention

The lithium secondary batteries of Examples and Comparative Examples were charged (CC-CV 0.1C, 4.2V, 0.05C cut-off) and discharged (CC 0.1C, 2.5V), and then an initial discharge capacity was measured. Thereafter, each battery was charged (CC-CV 0.1C, 4.2V, 0.05C cut-off) and discharged by DOD3% to prepare a cell of ab SOC97% state.

A discharge capacity was measured by charging (CC-CV 0.1C 4.2V 0.05C CUT-OFF) and discharging (CC 0.1C 2.5V CUT-OFF) at 16 weeks while storing the cell was stored in a 60°C constant temperature chamber. A capacity retention was calculated as a percentage of the measured discharge capacity to the initial discharge capacity.

### 2) Measurement of gas generation/CO₂ content

While storing the SOC97% cell prepared in the above 1) in a constant temperature chamber of 60°C, and an amount of gas generated at an inside of the cell at the 16th week was measured. Specifically, each cell was placed in a cell-sized jig and penetrated by a pin, and a pressure change in the jig was measured to be converted into the amount of gas generation.

The gas at the 16th week was collected in a cylinder. The cylinder was fastened to a gas chromatography-residual gas analyzer (GC-RGA) to analyze a CO₂ content (volume ratio) based on a total amount of gas.

The evaluation results are shown in Table 2 below.

**[Table 2]**

| | residual lithium (Li₂CO₃) (ppm) | coin half-cell | | full cell | | |
|---|---|---|---|---|---|---|
| | | initial capacity | capacity retention (100 cycles) | 16-week capacity retention (%) | amount of gas generation (mL) | CO₂ ratio |
| Example 1 | 1968 | 214 | 89% | 92% | 34 | 33% |
| Example 2 | 1845 | 212 | 87% | 91% | 35 | 38% |
| Example 3 | 1907 | 213 | 90% | 90% | 39 | 39% |
| Example 4 | 1845 | 211 | 81% | 87% | 51 | 60% |
| Example 5 | 4244 | 209 | 80% | 90% | 46 | 50% |
| Example 6 | 2511 | 211 | 85% | 87% | 40 | 41% |
| Example 7 | 2805 | 209 | 87% | 90% | 45 | 42% |
| Example 8 | 1713 | 208 | 90% | 92% | 33 | 31% |
| Example 9 | 1829 | 213 | 82% | 86% | 50 | 52% |
| Comparative Example 1 | 5474 | 208 | 75% | 82% | 82 | 80% |
| Comparative Example 2 | 2153 | 213 | 87% | 84% | 73 | 70% |
| Comparative Example 3 | 4305 | 209 | 79% | 83% | 80 | 77% |

Referring to Table 2, improved capacity retention and gas suppression properties were provided in Examples 1 to 3 where the coating formed of the water-soluble polymer and the oxygen scavenger compound including the organic acid, the sulfite-based compound or the phosphite-based compound was included.

In Example 4 where the heat-treatment temperature was slightly increased, the polymer matrix was partially damaged as shown in FIG. 3B and the CO₂ suppression effect were relatively hindered. In Example 5 where the heat treatment temperature was slightly low, sufficient washing was not performed to increase the amount of lithium impurities.

In Example 6 where the phosphate-based compound was used as an oxygen scavenger, capacity properties were relatively reduced and residual lithium/gas generation were increased compared to those from Example 3 where the phosphite ester-based compound was used.

In Example 7 where inorganic particles were used as an oxygen scavenger, solubility in water was lowered, thereby slightly increasing the residual lithium and the gas generation.

In Example 8 where the amounts of the water-soluble polymer and the oxygen scavenger were relatively increased, the initial capacity was relatively decreased.

In Example 9 where an excess amount of water was used, the oxygen scavenger was uniformly distributed to sufficiently reduce the residual lithium and the initial capacity was improved. However, the gas generation was slightly increased due to damages to a cathode surface by water, and the capacity retention was relatively reduced.

In Comparative Examples where the wet coating process was omitted, or the water-soluble polymer or the oxygen scavenger compound was not included, the gas generation was remarkably increased, and the capacity retention was also reduced. For example, as shown in Comparative Examples 2 and 3, the water-soluble polymer alone or the oxygen scavenger compound alone did not substantially implement the oxygen removal effect.

## Claims

1. A cathode active material for a lithium secondary battery, comprising:
a lithium-nickel-based metal oxide particle; and
a coating formed on a surface of the lithium-nickel-based metal oxide particle, the coating including a water-soluble polymer and an oxygen scavenger compound.

2. The cathode active material for a lithium secondary battery according to claim 1, wherein the water-soluble polymer includes at least one selected from the group consisting of poly(diallyl dimethyl ammonium chloride), poly(acrylamide-co-diallyldimethylammonium chloride), polyethylene imine, polyethylene glycol, polyethylene glycol diglycidyl ether, dopamine, (3-glycidyloxypropyl)trimethoxysilane and poly(1-vinylpyrrolidone-co-2-dimethylaminoethyl methacrylate).

3. The cathode active material for a lithium secondary battery according to any one of claims 1 and 2, wherein the oxygen scavenger compound includes an organic acid compound, a sulfite-based compound or a phosphite ester-based compound.

4. The cathode active material for a lithium secondary battery according to claim 3, wherein the organic acid compound includes ascorbic acid or a derivative thereof.

5. The cathode active material for a lithium secondary battery according to claim 3, wherein the sulfite-based compound includes at least one selected from the group consisting of sodium sulfite, ammonium sulfite, calcium sulfite, potassium sulfite and barium sulfite.

6. The cathode active material for a lithium secondary battery according to claim 3, wherein the phosphite ester-based compound is represented by Chemical Formula 3: 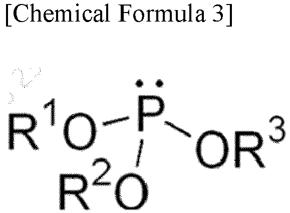 wherein, in Chemical Formula 3, R¹, R² and R³ are each independently hydrogen, a C1-C10 alkyl group or a silyl group.

7. The cathode active material for a lithium secondary battery according to any one of claims 1 to 6, wherein a molar ratio of nickel is 0.8 or more of elements except for lithium and oxygen in the lithium-nickel-based metal oxide particle.

8. The cathode active material for a lithium secondary battery according to any one of claims 1 to 7, wherein a content of the water-soluble polymer is in a range from 0.05 wt% to 2 wt% based on a weight of the lithium-nickel-based metal oxide particle.

9. The cathode active material for a lithium secondary battery according to any one of claims 1 to 8, wherein a content of the oxygen scavenger compound is in a range from 0.02 wt% to 1.5 wt% based on a weight of the lithium-nickel-based metal oxide particle.

10. The cathode active material for a lithium secondary battery according to any one of claims 1 to 9, wherein the lithium-nickel-based metal oxide particle has a structure of a secondary particle in which a plurality of primary particles are aggregated, and
the coating is formed on an outer surface of the secondary particle and at an interface between the primary particles in an inner region of the secondary particle.

11. A lithium secondary battery, comprising:
a cathode comprising the cathode active material for a lithium secondary battery according to any one of claims 1 to 10; and
an anode facing the cathode.

12. A method of preparing a cathode active material for a lithium secondary battery, comprising:
mixing lithium-nickel-based metal oxide particles into an aqueous solution containing a water-soluble polymer and an oxygen scavenger compound; and
heat-treating the lithium-nickel-based metal oxide particles mixed with the aqueous solution.

13. The method of claim 12, wherein the aqueous solution includes 5 wt% to 20 wt% of water based on a total weight of the lithium-nickel-based metal oxide particles.

14. The method of claim 13, wherein the aqueous solution includes 0.05 wt% to 2 wt% of the water-soluble polymer, and 0.02 wt% to 1.5 wt% of the oxygen scavenger compound based on the total weight of the lithium-nickel-based metal oxide particles.

15. The method of any one of claims 12 to 14, wherein heat-treating is performed at a temperature in a range from 200°C to 350°C.
